# EUROPEAN PATENT APPLICATION

(11) **EP 1 096 189 A1**
(43) Date of publication of application: **02.05.2001**
(21) Application number: 00309414.1
(22) Date of filing: 26.10.2000
(51) Int. Cl.: F16K 25/00, F16K 11/065, F16K 11/074, F16K 11/078

(54) **Valve with ceramic valve seats**

(30) Priority: 27.10.1999 JP 30611599
(71) Applicant: NGK SPARK PLUG CO., LTD, Mizuho-ku Nagoya-shi Aichi (JP)
(72) Inventor: Yogo, Tetsuji, Nagoya-shi, Aichi (JP); Nishizato, Hiroaki, Niwa-gun, Aichi (JP)
(74) Representative: Brown, Kenneth Richard

(57) **Abstract**

The invention aims to provide a ceramic valve which can stably exhibit excellent sliding properties over a long period of time, in which water leakage is unlikely to occur, and which provides excellent maintainability.

A ceramic valve (10) includes a stationary valve body (11) made of ceramic and a movable valve body (12) made of ceramic. A sliding surface (12a) of one of the valve bodies (11) and (12) is covered with a hard carbon film (40) formed mainly of amorphous carbon. The sliding surface of the stationary valve body and the sliding surface of the movable valve body each have an arithmetic mean roughness Ra of not greater than 0.08µm. Also, V1 is greater than V2, wherein V1 is the Knoop hardness Hk of the hard carbon film, and V2 is the Vickers hardness Hv of a ceramic substrate which forms a sliding surface (11a) of the other valve body (11), on which the hard carbon film is not formed.

## Description

### BACKGROUND OF THE INVENTION

### Field of the Invention

The present invention relates to a ceramic valve and a valve unit using the same.

### Description of the Background Art

Conventionally, as a valve used for feeding cold water and hot water, there has been widely used a ceramic valve including a stationary valve body and a movable valve body which are in contact with each other at their sliding surfaces. Such a ceramic valve is configured such that, for example, disk-like valve bodies are caused to slide while remaining in contact with each other, to thereby open/close a fluid path formed in each of the valve bodies. There are various types of ceramic valves, such as a type capable of individually feeding and shutting off cold water (or hot water) and a type capable of mixing cold water and hot water for use (a so-called cold-water-hot-water mixture faucet). Alumina ceramic is a popular material for a valve body, since the material exhibits excellent corrosion resistance and wear resistance and is inexpensive. Recently, in order to improve sliding properties of a valve body, it has often been proposed that an amorphous carbon film, such as a diamond-like thin film, be formed on a sliding surface of a valve body (see, for example, Japanese Patent Application Laid-Open (*kokai*) Nos. 3-223190, 6-101772, and 8-233121). Since the amorphous carbon film has self-lubricating properties, even when sliding members made of dense ceramic are caused to slide on each other, no water leakage occurs, and smooth sliding properties can be obtained.

In the above-mentioned ceramic valve, the sliding surface of a valve body is usually finished to high accuracy in order to prevent water leakage. However, sliding capability and sealing capability to prevent water leakage are essentially contradictory factors, involving the following dilemma. When the roughness of a sliding surface is rendered high in order to improve sliding capability, water leakage occurs. By contrast, when the roughness of a sliding surface is rendered low in order to improve sealing capability, the valve bodies become prone to sticking; i.e., a so-called linking phenomenon is likely to occur.

In order to cope with this problem, Japanese Patent Application Laid-Open (*kokai*) No. 8-233121 proposes that a sliding surface formed of an amorphous carbon film assumes a slightly high roughness range of 0.08-0.4 µm so as to attain both sealing capability and prevention of linking. However, since this roughness level is too high to completely prevent water leakage merely by means of the amorphous carbon film, application of grease becomes indispensable. In this case, when the grease flows away in the course of long-term use of the valve, wear of the amorphous carbon film progresses because of establishment of high surface roughness. As a result, fine projections are scraped off, or pits are filled with wear particles; consequently, occurrence of linking becomes highly likely.

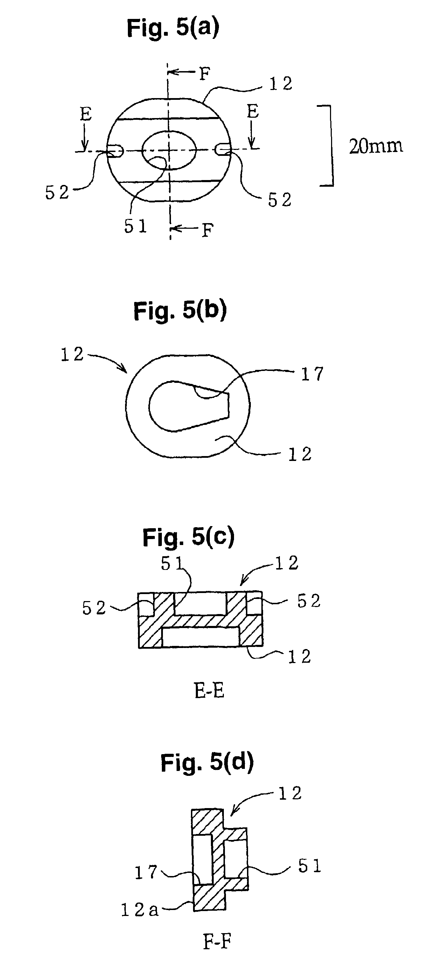

According to Japanese Patent Application Laid-Open *(kokai)* Nos. 3-223190 and 6-101772, an amorphous carbon film (diamond-like carbon film) is formed merely on one of two sliding surfaces to thereby enable elimination of grease application. Techniques disclosed in these publications are common in that an amorphous carbon film is formed merely on one of two valve bodies (see examples 1-4 in Table 1 for the former, and see FIG 5 for the latter) and in that there is employed surface roughness lower than that disclosed in Japanese Patent Application Laid-Open *(kokai)* No. 8-233121. However, in practice, as sliding of a valve is repeated over a long period of time without application of grease, wear of the amorphous carbon film progresses, resulting in impaired sliding properties. Accordingly, commercially available ceramic valves of various makers are without exception put on the market with grease applied. As a result, when applied grease is depleted, grease must be applied again; i.e., troublesome maintenance is involved. According to many actual transactions of products, when sliding capability is impaired due to run-out of grease, a valve itself is replaced with a new one. This practice, however, is becoming inappropriate to the prevailing trend towards recycling and conservation of resources.

### SUMMARY OF THE INVENTION

In view of the foregoing, an object of the present invention is to provide a ceramic valve which can stably exhibit excellent sliding properties over a long period of time, in which water leakage is unlikely to occur, and which provides excellent maintainability, as well as to provide a valve unit using the same.

To achieve the above object, a first configuration of a ceramic valve of the present invention is characterized by comprising a stationary valve body made of ceramic and a movable valve body made of ceramic and characterized in that the sliding surface of one of the valve bodies is covered with a hard carbon film comprising amorphous carbon, and in that the sliding surface of the stationary valve body and the sliding surface of the movable valve body have an arithmetic mean roughness Ra of not greater than 0.08 µm.

The hard carbon film is preferably formed mainly of amorphous carbon. As used herein, the expression "formed mainly of amorphous carbon" means that more than 50% by weight of the hard carbon film is amorphous carbon.

The ceramic valve is also characterized in that V1 is greater than V2, wherein V1 is the Knoop hardness Hk of the hard carbon film, and V2 is the Vickers hardness Hv of a ceramic substrate which forms a sliding surface portion of the other valve body on which the hard carbon film is not formed.

The present inventors have reached the conclusion that in order to obtain smooth sliding capability while sealing capability is maintained between the valve bodies, forming the hard carbon film merely on one of the sliding surfaces is effective, and imparting a mean roughness Ra of not greater than 0.08 µm - which is lower than a roughness level disclosed in, for example, Japanese Patent Application Laid-Open *(kokai)* No. 8-233121- to both of the sliding surfaces is also effective. As a result of further study on the reason that the techniques disclosed in Japanese Patent Application Laid-Open *(kokai)* Nos. 3-223190 and 6-101772 fail to exhibit sufficient sealing capability over a long period of time, the present inventors have found that the most important point is to suppress wear of the hard carbon film formed on the sliding surface of one valve body which arises from sliding on a sliding-mate material and that this suppression of wear is attained through establishing of the hardness of the hard carbon film greater than the hardness of the ceramic substrate (hereinafter may be called a "sliding-mate material") whose surface forms the sliding surface of the other valve body, thereby achieving the object of the present invention.

The above subject will next be described in fuller detail.

Herein, the expression "hard carbon film formed mainly of amorphous carbon" denotes a film characterized in that the skeletal structure of carbon, which is a main component of the film, is amorphous and characterized by being harder than a ceramic substrate on which the film is formed. Such a film can be grown by a vapor-phase growth process, which is established through application of the principle of a physical vapor deposition process or a chemical vapor deposition process. Specifically, a hydrocarbon (for example, methane gas) or a mixed gas of a hydrocarbon and hydrogen is introduced as a material gas into a pressure-reduced atmosphere. The material gas is thermally decomposed by use of radio-frequency plasma or a resistance-heating filament, thereby depositing a film on the surface of the ceramic substrate.

A film in which diamond bonds (covalent bonds via sp³ hybrid orbitals) make up a relatively large portion of bonds forming the skeletal structure of carbon is called a diamond-like carbon (DLC) film. The diamond-like carbon film has sufficient hardness and lubricating capability. Conceivably, this is because dangling bonds appearing in the skeletal structure of carbon are blocked by hydrogen atoms derived from the material gas, thereby realizing a surface structure in which hydrogen bonds, which cause adhesion of the material, become unlikely to form. Also, conceivably, entry of hydrogen atoms into dangling bonds of carbon atoms stabilizes an amorphous structure through saturation of carbon chains and suppresses formation of a graphite structure, which would otherwise cause an impairment in film strength and adhesion between the film and a substrate on which the film is formed, thereby contributing to realization of a DLC film having high strength and high adhesion.

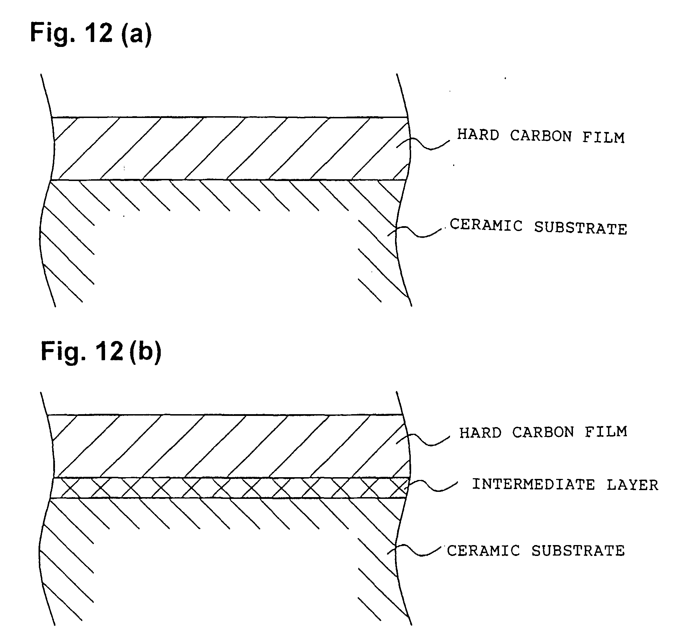

In order to improve film hardness, the hard carbon film used in the present invention may contain additive elements, such as phosphorus, silicon, tungsten, and chromium, in a total amount of less than 50% by weight. A film which contains these additive elements may be formed by the method disclosed in, for example, Japanese Patent Application Laid-Open (*kokai*) No. 63-162870, 63-162871, or 63-162872. As shown in FIG 12(a), the hard carbon film may be formed directly on the ceramic substrate. Alternatively, as shown in FIG 12(b), in order to improve film adhesion, one or more intermediate layer(s) may be formed between the hard carbon film and the ceramic substrate. Such an intermediate layer may contain, for example, silicon serving as a main component (the intermediate layer may be amorphous or crystalline). Furthermore, less than 50% by weight of the carbon component of the hard carbon film may be crystalline.

Next, the hardness of the ceramic substrate considered as a bulk material can be measured relatively easily and accurately by means of popular Vickers hardness Hv. By contrast, since the hard carbon film is a thin film formed by a vapor-phase growth process or a similar process, selection of a method for measuring hardness is very important for accurate evaluation of hardness. The above-described first configuration of the present invention is characterized in that the hardness of the hard carbon film is specified by means of Knoop hardness Hk, whereas the hardness of the ceramic substrate serving as a sliding-mate material is specified by means of Vickers hardness Hv. More specifically, through establishment of the relationship V1>V2, wherein V1 is the Knoop hardness Hk of the hard carbon film, and V2 is the Vickers hardness Hv of the sliding-mate material, even when the arithmetic mean roughness Ra of the sliding surfaces is set to a low value of not greater than 0.08 µm, wear of the hard carbon film which arises from friction with the sliding-mate material in the course of sliding is effectively suppressed, thereby preventing linking. As a result, sealing capability is improved by imparting a low value of surface roughness Ra to the sliding surfaces. Also, since wear of the hard carbon film is unlikely to progress over long-term use, sliding properties can be maintained intact. Thus, positive application of grease to the sliding surfaces can be eliminated in real terms (however, the present invention is not limited to an embodiment of a ceramic valve in which greasing is eliminated).

When the arithmetic mean roughness Ra of the sliding surfaces is in excess of 0.08 µm, the sealing capability of the sliding surface becomes insufficient. By contrast, when the arithmetic mean roughness Ra of the sliding surfaces is less than 0.02 µm, polishing consumes excessive man-hours, potentially resulting in increased cost. The arithmetic mean roughness Ra of the sliding surfaces is preferably 0.03-0.06 µm. The arithmetic mean roughness Ra used in the present invention is measured by the method specified in JIS-B0601 (1994). According to JIS-B0601 (1994), at an arithmetic mean roughness Ra ranging from 0.02 µm (not included) to 0.08 µm (included), the cutoff value is 0.25 mm, and the standard evaluation length is 1.25 mm.

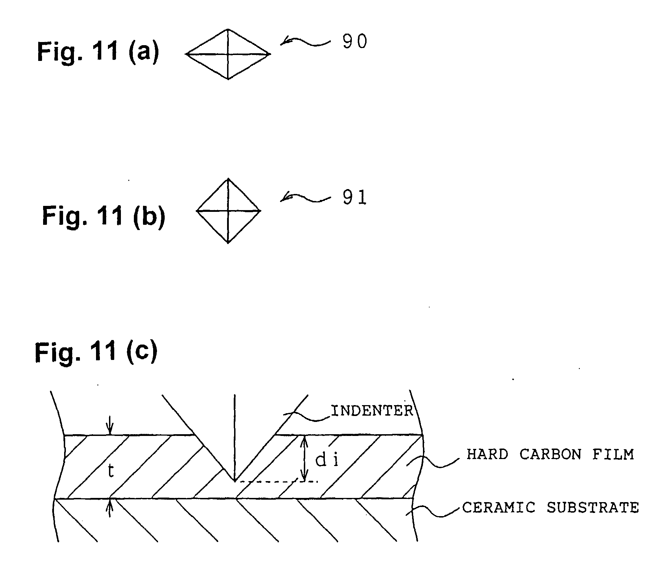

Knoop hardness Hk and Vickers hardness Hv are obtained in the following manner. A pyramidal diamond indenter is indented into the surface of an object to be measured under a predetermined test load (unit: kgf). The test load (unit: g) is divided by the surface area of the thus-formed dent. The thus-obtained value represents the hardness. Thus, the principles of measurement are qualitatively the same. The thus-obtained value of Knoop hardness Hk and the thus-obtained value of Vickers hardness Hv have a common unit (unit of pressure). The Knoop hardness test and the Vickers hardness test differ essentially in the specific shape of an indenter. As shown in FIG 11(b), an indenter 91 for use in the Vickers hardness test assumes the shape of a regular quadrangular pyramid having an angle of 136° between the opposite faces. As shown in FIG 11 (a), an indenter 90 for use in the Knoop hardness test assumes the shape of a quadrangular pyramid having a dihedral angle of 172°30' and 130° and a rhombic transverse cross section.

For the same volume, the Knoop hardness indenter is greater in lateral area than the Vickers hardness indenter. Thus, under the same load, the Knoop hardness indenter marks a shallower dent in an object to be measured than does the Vickers hardness indenter. As a result, the Knoop hardness indenter is unlikely to be influenced by the ceramic substrate on which the hard carbon film is formed, thereby measuring the hardness of the hard carbon film accurately. By contrast, since the Vickers hardness indenter marks a deep dent, the tip of the indenter often penetrates through the hard carbon film and into the ceramic substrate. Therefore, Vickers hardness Hv fails to accurately represent the hardness of the hard carbon film. However, in contrast to Knoop hardness Hk, which is susceptible to local structural nonuniformity because of the Knoop hardness indenter having a flat transverse cross section, Vickers hardness Hv can become an index which accurately reflects an average hardness of a polycrystalline ceramic body considered a bulk body. Thus, in the present invention, the hardness of the ceramic substrate serving as a sliding-mate material is specified in terms of Vickers hardness Hv.

In view of the above object of the present invention, the present invention employs a value of Knoop hardness Hk of the hard carbon film as measured by the method specified in JIS-Z2251 (1996) under a test load of 0.196N. Preferably, as shown in FIG 11 (c), in order to reduce influence of the ceramic substrate on which the hard carbon film is formed, the Knoop hardness Hk of the hard carbon film is measured under the condition that a tip portion of the indenter does not reach the ceramic substrate. More preferably, di/t is not greater than 1/2, wherein di is the depth of penetration of the indenter and t is the average thickness of the hard carbon film. Whether or not this is satisfied depends on the hardness level and average thickness of the hard carbon film. Generally, at a thickness level not less than 0.9 µm, no problem arises in measuring Knoop hardness.

The present invention employs a value of Vickers hardness Hv of the ceramic substrate serving as a sliding-mate material as measured by the method specified in JIS-R1610 (1994) under a test load of 196N.

According to PCT Application Laid-Open No. 63-501237, the thickness of a hard carbon film which covers the sliding surface of a ceramic valve body is 0.5-5 µm, preferably 1 µm, and Vickers hardness Hv of the hard carbon film is preferably not less than 3500. According to Japanese Patent Application Laid-Open (*kokai*) No. 8-47150, Vickers hardness Hv of a hard carbon film (DLC film) ranges from 700 to 1800. However, the hardness of the hard carbon film disclosed in these publications is expressed in terms of Vickers hardness Hv (a test load level is not disclosed).
Therefore, it is highly likely that the disclosed values of hardness do not accurately represent the hardness of the film, due to influence of a ceramic substrate on which the film is formed.

In order to impart a surface roughness Ra of not greater than 0.08 µm (preferably not greater than 0.05 µm) to the sliding surface of the hard carbon film, the valve body on which the hard carbon film is formed is configured preferably such that the surface of the ceramic substrate on which the hard carbon film is formed has an arithmetic mean roughness Ra of not greater than 0.10 µm (preferably not greater than 0.05 µm).
When the roughness Ra of the sliding surface of the hard carbon film becomes slightly greater than that of the surface of the ceramic substrate on which the film is formed, the surface of the ceramic substrate on which the film is formed is finished preferably to a surface roughness Ra slightly lower than a target surface roughness of the film. In the valve body on which the hard carbon film is formed, the arithmetic mean roughness Ra of the surface of the ceramic substrate on which the film is formed is estimated from a value of the arithmetic mean roughness Ra as measured in the following manner. The valve body is heated to a temperature of 1100°C in dry air to thereby burn off the hard carbon film. The thus-exposed surface, on which the film was formerly formed, is measured for the arithmetic mean roughness Ra.

A second configuration of a ceramic valve of the present invention is characterized by comprising a stationary valve body made of ceramic and a movable valve body made of ceramic and characterized in that the sliding surface of at least one of the valve bodies is covered with a hard carbon film formed mainly of amorphous carbon and in that the hard carbon film has a Knoop hardness Hk of 1200-1800 as measured under the condition that a tip portion of an indenter for measuring hardness does not reach a ceramic substrate on which the hard carbon film is formed. From the viewpoint that Knoop hardness Hk is an appropriate factor for proper evaluation of the hardness of the hard carbon film as mentioned previously, the present inventors carried out extensive studies and as a result found the optimum range of Knoop hardness Hk of the hard carbon film for attaining durable lubricating performance and good sealing capability of the hard carbon film, thereby achieving the above-mentioned second configuration of the present invention. The second configuration is not limited to an embodiment in which the hard carbon film is formed merely on the sliding surface of a single valve body, but includes an embodiment in which the hard carbon film is formed on each of the two sliding surfaces.

When the Knoop hardness Hk of the hard carbon film is less than 1200, wear resistance of the film becomes insufficient. As a result, for example, even when required sliding properties are secured in the early stage, wear becomes likely to progress quickly, resulting in accelerated deterioration in sliding properties due to, for example, linking. By contrast, when the Knoop hardness Hk of the hard carbon film is in excess of 1800, sealing capability and lubricating performance may rather be impaired in some cases. In the hard carbon film, carbon particles which are generated through gradual wear of a surface portion thereof effected by sliding friction conceivably play an important role in reducing friction and improving sealing capability through transient filling of microscopic pits therewith. Accordingly, when the hardness of the hard carbon film is too low, wear resistance of the film is lost. Also, it is assumed from the above-mentioned mechanism that when the hardness of the hard carbon film is excessively high, lubricating performance and sealing capability are impaired. More preferably, the Knoop hardness Hk of the hard carbon film is 1200-1600.

In order to further improve sealing capability, the above second configuration and the previously mentioned first configuration may be combined. In this case, the hard carbon film comes into contact with the sliding surface of a sliding-mate material, which is a ceramic substrate. Through employment of a Knoop hardness Hk of not greater than 1800, the progress of wear of the sliding surface of the sliding-mate material, or the ceramic substrate, is suppressed, thereby improving durability of sliding performance.

Preferably, in order to attain durable lubricating performance, the average thickness of the hard carbon film is not less than 0.9 µm. A thickness in excess of 1.5 µm is of surplus design and consumes excessive film formation time, resulting in an unnecessary increase in cost. More preferably, the average thickness of the hard carbon film is 0.9-1.2 µm.

Next, the ceramic substrate of the stationary valve body and that of the movable valve body are not particularly limited. Because of excellent durability against thermal shock and thermal stress and excellent resistance to chemicals, alumina-based dense sintered body can be used favorably in the present invention.

A ceramic valve which substantially eliminates application of grease to sliding surfaces through employment of the present invention can be embodied in the following manner: the stationary valve body and the movable valve body are disposed such that the sliding surface on which the hard carbon film is formed and the sliding surface on which the hard carbon film is not formed are in direct contact with each other without positive interposition of lubricant therebetween. However, lubricant, such as grease, applied to a portion other than the valve bodies for improving sliding operation of, for example, a valve operation lever may enter between the sliding surfaces of the valve bodies. This is not considered to constitute the positive interposition of lubricant between the sliding surfaces.

The above ceramic valve of the present invention may assume the following configuration: one of the stationary valve body and the movable valve body serves as a feed-side member having one or more liquid feed portions; the other valve body is disposed in a relatively slidable manner with respect to the feed-side member such that the sliding surfaces are in contact with each other, and serves as a flow regulation member for regulating a flow rate of liquid which is fed from the liquid feed portion(s) as a result of sliding; and the feed-side member or the flow regulation member has a liquid discharge portion for discharging the liquid whose flow rate is regulated by the flow regulation member. Specifically, a high-temperature-side feed portion and a low-temperature-side feed portion, which serve as the liquid feed portions, are formed on the feed-side member. The ceramic valve further comprises a mixing chamber for varying the feed ratio between the high-temperature-side feed portion and the low-temperature-side feed portion according to sliding of the flow regulation member with respect to the feed-side member. The mixing chamber can be formed in the flow regulation member, but may be formed by use of a member other than the flow regulation member.

A valve unit of the present invention comprises:
a ceramic valve assuming the above-described configuration;
a movable-valve-body mount member on which the movable valve body is mounted and which comprises an operation member for causing the movable valve body to slide with respect to the stationary valve body; and
a stationary-valve-body mount member on which the stationary valve body is mounted.

The valve unit is characterized in that a liquid feed port communicating with the liquid feed portion is formed in the movable-valve-body mount member or the stationary-valve-body mount member which corresponds to a valve body functioning as the flow regulation member, whereas a liquid discharge port communicating with the liquid discharge portion is formed in the movable-valve-body mount member or the stationary-valve-body mount member which corresponds to a valve body on which the liquid discharge portion is formed.

Through employment of the present invention, a ceramic valve and a valve unit using the same can improve their sliding properties, sealing capability, durability of sliding properties, and durability of sealing capability even in applications susceptible to thermal cycles; for example, application to a hot-water faucet or a cold-water-and-hot-water mixture faucet.

Embodiments of the present invention will next be described with reference to the drawings.

### BRIEF DESCRIPTION OF THE DRAWINGS

FIG 1a is an exploded perspective view showing an example of a ceramic valve according to the present invention;
FIG 1b is a sectional view showing a modified example of the ceramic valve;
FIG 2 is an exploded perspective view showing an example of a valve unit using the ceramic valve of FIGS. 1a and 1b;
FIGS. 3a and 3b are schematic views showing a detailed structure of the ceramic valve of FIGS. 1a and 1b;
FIGS. 4a, b and c are schematic views showing modified examples of the structure of FIGS. 3a and 3b;
FIGS. 5a and 5b are, respectively, plan and bottom views of a flow regulation member of a ceramic valve according to a modified example, and FIGS. 5c and 5d are sectional views taken along lines E-E and F-F of FIGS. 5a;
FIGS. 6a and 6b comprise, respectively, a plan and bottom view of a feed-side member of the ceramic valve and sectional views taken along lines A-A, B-B of the plan view, and C-C, D-D of the bottom view;
FIGS. 7a and 7b are, respectively, plan and bottom views of a flow regulation member of a ceramic valve according to another modified example, and FIG. 7c is a sectional view taken along line I-I of FIG 7a;
FIGS. 8a and 8b are, respectively, plan and bottom views of a feed-side member of the ceramic valve, and FIGS. 8c and 8d are sectional views taken along lines H-H and G-G of FIG.8a;
FIGS. 9a and 9b are profiles showing a surface roughness curve of a polished surface as measured before and after formation of a hard carbon film, and FIGS. 9c and 9d are profiles showing corresponding surface waviness curves;
FIG 10 is a profile showing a measured Raman spectrum of a hard carbon film;
FIGS. 11a and 11b show, respectively, the shapes of indentors used in the Knoop and Vickers hardness tests, and FIG 11c illustrates an indentor being used to measure the hardness of a hard carbon film on a ceramic substrate;
FIGS. 12a and 12b are schematic views showing, respectively, formation of a hard carbon film, and a modified example thereof.

### DESCRIPTION OF THE PREFERRED EMBODIMENTS

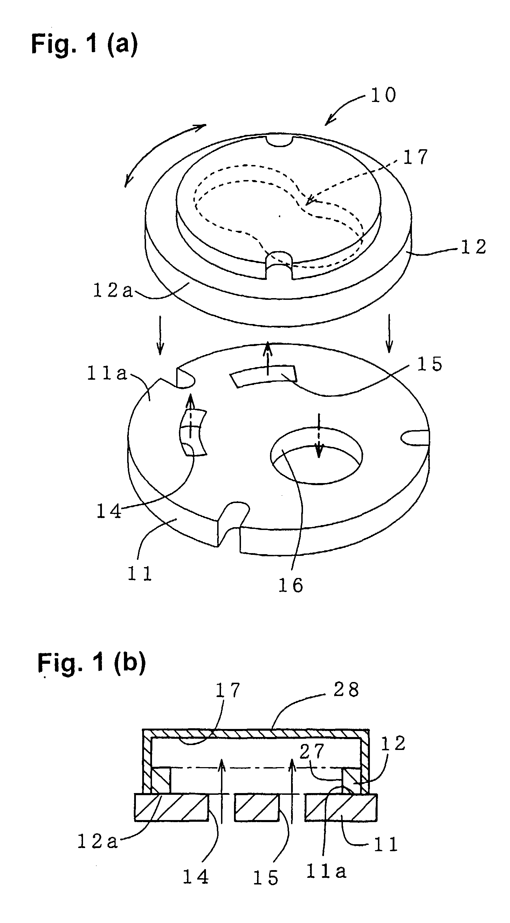

FIG 1 shows a ceramic valve according to an embodiment of the present invention. A ceramic valve 10 is used as a valve portion of a mixture faucet for mixing liquids of different temperatures, such as hot water and cold water, and includes a feed-side member 11 assuming a plate-like shape, such as a disk, and serving as a stationary valve body and a flow regulation member 12 serving as a movable valve body. The feed-side member 11 and the flow regulation member 12 are placed on each other such that a sliding surface 11a formed on one side of the feed-side member 11 and a sliding surface 12a formed on one side of the flow regulation member 12 are in contact with each other. Each of the members 11 and 12 is formed of an alumina-based dense sintered body.

The feed-side member 11 has liquid inlets 14 and 15 formed therein in such a manner as to extend therethrough in the thickness direction thereof and serving as two liquid feed portions. One liquid inlet is a high-temperature liquid inlet 14 serving as a high-temperature-side feed portion, and the other liquid inlet is a low-temperature liquid inlet 15 serving as a low-temperature-side feed portion. A high-temperature liquid and a low-temperature liquid (for example, hot water and cold water) enter the high-temperature liquid inlet 14 and the low-temperature liquid inlet 15, respectively, from unillustrated feed lines located opposite the sliding surface 11a with respect to the feed-side member 11, and then outflow toward the flow regulation member 12. The feed-side member 11 also has a liquid discharge portion 16 formed therein in such a manner as to extend therethrough in the thickness direction thereof. Liquid from the flow regulation member 12 enters the liquid discharge portion 16 from the sliding surface 12a side and outflows into an outflow line located opposite the sliding surface 11a with respect to the feed-side member 11.

The flow regulation member 12 has a mixing chamber 17 formed therein in such a manner as to open toward the sliding surface 11a. The mixing chamber 17 overlaps the high-temperature liquid inlet 14, the low-temperature liquid inlet 15, and the liquid discharge portion 16 to thereby communicate therewith. The mixing chamber 17 mixes a high-temperature liquid received from the high-temperature liquid inlet 14 and a low-temperature liquid received from the low-temperature liquid inlet 15 and discharges the resulting mixture into the liquid discharge portion 16. The flow regulation member 12 can rotate on the sliding surface 11a relative to the feed-side member 11. The area ratio between an overlapped portion of the mixing chamber 17 and the high-temperature liquid inlet 14 and an overlapped portion of the mixing chamber 17 and the low-temperature liquid inlet 15; i.e., the ratio between liquid fed from the high-temperature liquid inlet 14 to the mixing chamber 17 and liquid fed from the low-temperature liquid inlet 15 to the mixing chamber 17, varies with the relative rotation. Also, the flow regulation member 12 can reciprocate between a position where the mixing chamber 17 overlaps the liquid inlets 14 and 15 and a position where the mixing chamber 17 does not overlap the liquid inlets 14 and 15, thereby enabling/disabling liquid discharge from the liquid discharge portion 16.

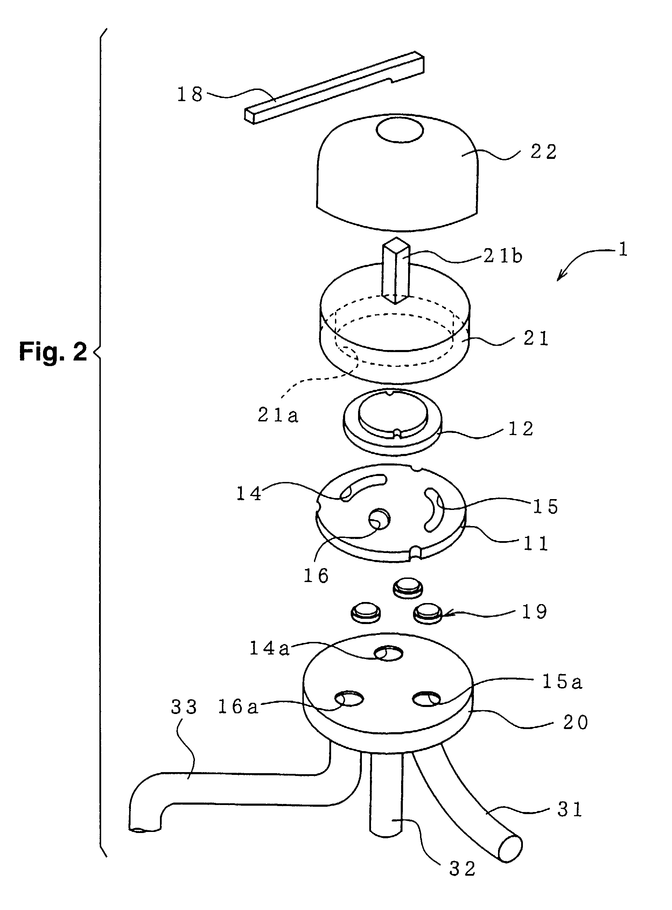

FIG 2 is an exploded perspective view showing an example of a valve unit 1 into which the ceramic valve 10 is incorporated. The flow regulation member 12 serving as the movable valve body is fitted into and accommodated in an opening portion 21a which is formed in a cover 21 serving as a movable-valve-body mount member, at the bottom side of the cover 21. A lever mount portion 21b is integrally provided on the upper surface of the casing 21. An operation lever 18 is attached to the lever mount portion 21b via a cover 22. The feed-side member 11 serving as the stationary valve body is fixed on a disklike base member 20 serving as a stationary-valve-body mount member. Liquid feed ports 14a and 15a communicating with the liquid inlets 14 and 15 (liquid feed portions), respectively, formed in the feed-side member 11, and a liquid discharge port 16a communicating with the liquid discharge portion 16 are formed in the base member 20. A ring-shaped seal member 19 of, for example, rubber is disposed along a circumferential edge portion of each of the liquid feed ports 14a and 15a and the liquid discharge port 16a while being sandwiched between the base member 20 and the feed-side member 11. A tap portion 33 is connected to the liquid discharge port 16a. A hot-water feed pipe 32 and a cold-water feed pipe 31 are connected to the liquid feed ports 14a and 15a, respectively.

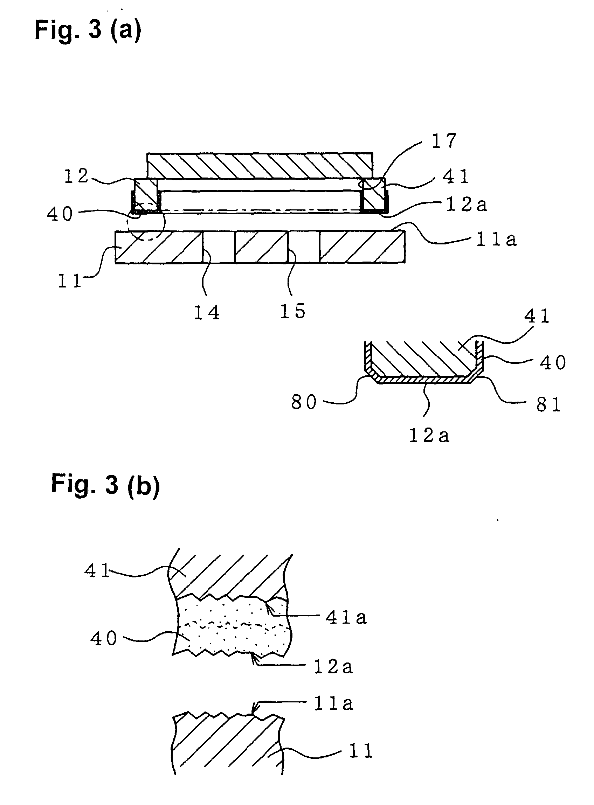

In the ceramic valve 10 of FIG 1, one of the flow regulation member 12 and the feed-side member 11 is smaller in area than the other; specifically, the sliding surface 12a of the flow regulation member 12 is smaller in area than the sliding surface 11a of the feed-side member 11. As shown in FIG 3, the sliding surface 12a is formed of a hard carbon film 40, which is mainly made of amorphous carbon and covers a ceramic substrate 41 formed of an alumina-based dense sintered body. The sliding surface 11a of the feed-side member 11 serving as a sliding-mate material is embodied in the form of an exposed surface of a ceramic substrate formed of an alumina-based dense sintered body. As shown in FIG. 3, an outer edge portion of the sliding surface 12a and a circumferential edge portion of the opening of the mixing chamber 17 are finely chamfered by about 0.05-0.2 mm, thereby forming finely chamfered portions 80 and 81.

The sliding surfaces 11a and 12a are adjusted so as to assume an arithmetic mean roughness Ra of not greater than 0.08 µm. The ceramic substrate 41 is adjusted such that the surface thereof on which the hard carbon film 40 is formed to thereby provide the sliding surface 12a assumes an arithmetic mean roughness Ra of not greater than 0.08 µm. The Knoop hardness Hk of the hard carbon film 40 is adjusted to a range of 1200-1800 (preferably 1200-1600). The Vickers hardness Hv of a ceramic substrate on which the sliding surface 11a is formed is adjusted to a range of 1100-1600 (preferably 1150-1500). The hardness of the hard carbon film 40 is adjusted such that a value V1 of Knoop hardness Hk of the hard carbon film 40 becomes greater than a value V2 of Vickers hardness Hv of the ceramic substrate on which the sliding surface 11a is formed.

The feed-side member 11 and the flow regulation member 12 can be manufactured in the following manner. Sintering aid powders of, for example, SiO₂, CaO, and MgO are added to an alumina powder, thereby obtaining a material powder. The material powder is compacted into green compacts corresponding to the feed-side member 11 and the flow regulation member 12. These green compacts are sintered at a temperature of 1550-1600°C, thereby obtaining sintered bodies; i.e., ceramic substrates. The surface of the ceramic substrate corresponding to the feed-side member 11; i.e., the surface which will become the sliding surface 11a, is finished to an arithmetic mean roughness Ra of not greater than 0.08 µm by a known lapping process which uses abrasive grains of diamond (about an average grain size of 2 µm). For example, in order to impart a Vickers hardness Hv of 1100-1600 to the ceramic substrate to be obtained, it is preferable that the sintered body contain alumina in an amount of 94-99.5% by weight and assume a relative density of not less than 98% and an average grain size of 2-10 µm.

The surface of the ceramic substrate corresponding to the flow regulation member 12; i.e., the surface on which the hard carbon film 40 will be formed, is finished to an arithmetic mean roughness Ra of not greater than 0.08 µm by a lapping process similar to that for the feed-side member 11. Next, the polished surface is debindered and cleaned. Subsequently, the ceramic substrate is placed in the vacuum chamber of a plasma enhanced CVD system such that the polished surface is set on the cathode side. The vacuum chamber is evacuated, and a hydrocarbon gas (for example, methane, ethylene, benzene, or a mixture of any of the components and hydrogen; the present embodiment uses methane) serving as a material gas is introduced into the vacuum chamber through a gas inlet. A radio-frequency voltage is applied between the cathode and the anode within the vacuum chamber to thereby generate plasma. As a result, the hydrocarbon decomposes, and amorphous carbon is deposited while hydrogen is incorporated into a growing layer, thereby forming the hard carbon film 40 (so-called plasma CVD process). Notably, the hardness of the hard carbon film 40 can be adjusted through modification of the pressure of a material gas to be introduced (for example, when methane is used, the pressure of methane to be introduced ranges from about 0.3 torr to about 0.7 torr). Generally, the lower the pressure of a material gas to be introduced, the harder a film becomes.

Next will be described a method for using the valve unit 1 of FIG 2.

When the flow regulation member 12, together with the casing 21 and the cover 22, is rotated relative to the feed-side member 11 in a direction corresponding to the high-temperature liquid inlet 14 by means of the lever 18, the area of an overlap of the high-temperature liquid inlet 14 and the mixing chamber 17 increases. Accordingly, the ratio of a high-temperature liquid flowing into the mixing chamber 17 to a low-temperature liquid flowing into the mixing chamber 17 increases. As a result, the temperature of a mixed liquid discharged from the liquid discharge portion 16 increases. By contrast, when the flow regulation member 12 is rotated in a direction corresponding to the low-temperature liquid inlet 15, the ratio of the low-temperature liquid increases. As a result, the temperature of the mixed liquid decreases. In this manner, the temperature of the mixed liquid to be discharged can be varied freely through adjustment of the angle of rotation of the flow regulation member 12. When the lever 18 is moved vertically, the flow regulation member 12 reciprocates relative to the feed-side member 11. In this case, when the mixing chamber 17 overlaps the liquid inlets 14 and 15, discharge of liquid is enabled. By contrast, when the mixing chamber 17 does not overlap the liquid inlets 14 and 15, discharge of liquid is disabled.

In the above-described configuration, the value V1 of Knoop hardness Hk of the hard carbon film 40 is rendered greater than the value V2 of Vickers hardness Hv of a sliding-mate material; i.e., V1>V2. As a result, even when the surface roughness Ra of the sliding surfaces 11 a and 12a assumes a low value not greater than 0.08 µm, wear of the hard carbon film 40 during continued sliding is effectively suppressed, thereby preventing linking. Thus, in addition to an improvement in sealing capability effected through impartment of a low surface roughness Ra to the sliding surfaces 11a and 12a, wear of the hard carbon film becomes unlikely to progress in the course of long-term use, thereby attaining durable sliding properties. Therefore, the need for positive application of grease to the sliding surfaces 11a and 12a can substantially be eliminated. Adjustment of Knoop hardness Hk of the hard carbon film 40 to 1200-1800 (preferably 1200-1600) also contributes greatly to attainment of durable lubricating performance and improved sealing capability of the hard carbon film 40.

The liquid discharge portion 16 may be formed on the flow regulation member 12 side. As shown in FIG 1(b), in place of the mixing chamber 17, a through-hole portion 27 may be formed in the flow regulation member 12, while a cover member 28 is disposed in such a manner as to cover the flow regulation member 12 from above. Serving as the mixing chamber 17, the interior space of the cover member 28 receives liquids from the high-temperature and low-temperature liquid inlets 14 and 15 via the through-hole portion 27.

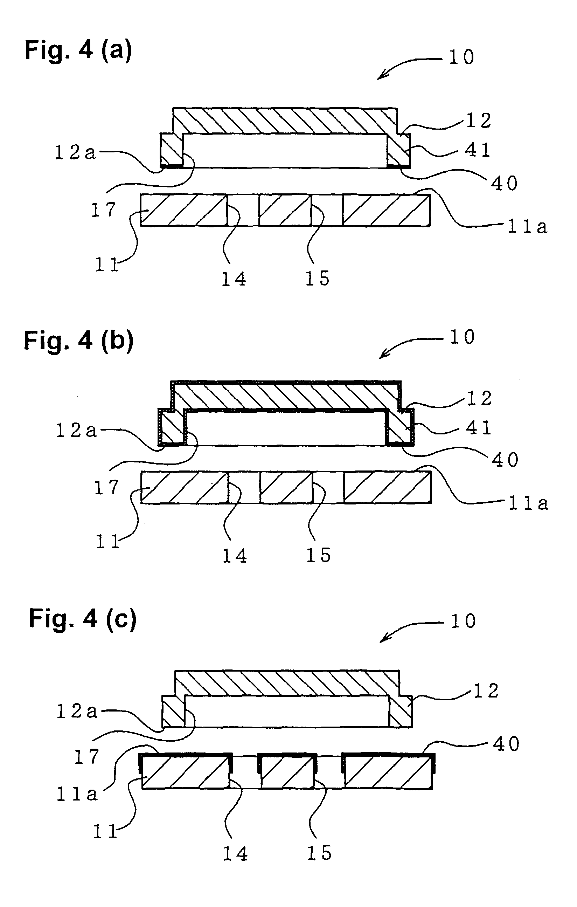

In FIG 3, the hard carbon film 40 of the flow regulation member 12 covers the end face of the ceramic substrate corresponding to the sliding surface 12a, turns around edge portions of the ceramic substrate, and further extends to an intermediate position on the outer wall of the member 12 and an intermediate position on the wall of the mixing chamber 17 in the thickness direction of the member 12. As a result and by virtue of the finely chamfered portions 80 and 81 of FIG. 3a, edge portions of the sliding surface 12a become unlikely to gall the sliding surface 11a of the sliding-mate material. As shown in FIG 4(a), the hard carbon film 40 may merely cover the end face of the ceramic substrate corresponding to the sliding surface 12a. By contrast, as shown in FIG 4b, the hard carbon film 40 may cover the entire surface of the flow regulation member 12, including the inner surface which defines the mixing chamber 17 and an outer surface. Alternatively, as shown in FIG 4c, the sliding surface 11a of the feed-side member 11, not the sliding surface 12a of the flow regulation member 12, may be formed of the hard carbon film 40.

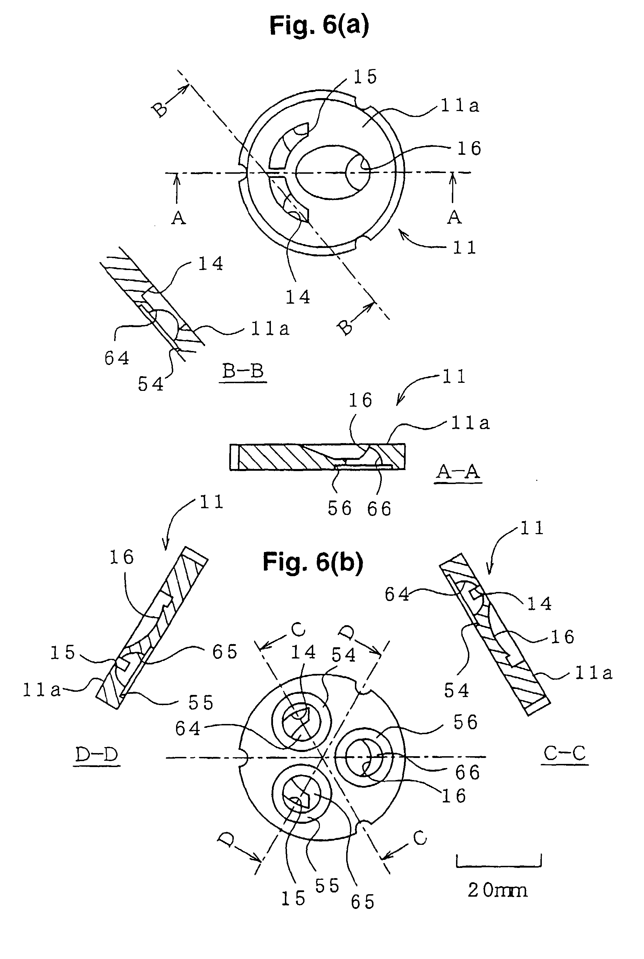

FIGS. 5 and 6 show a modified example of the ceramic valve. FIG. 5 shows the flow regulation member 12 of the modified ceramic valve, and FIG 6 shows the feed-side member 11 of the modified ceramic valve (FIGS. 5 and 6 include a 20 mm scale for dimensional reference and do not show the hard carbon film). As shown in FIG 5, a recess 51 and two cuts 52 are formed in an end face of the flow regulation member 12 opposite the sliding surface 12a and adapted to engage the flow regulation member 12 with the cover 21 (FIG. 2) serving as the movable-valve-body mount member. An opening portion of the mixing chamber 17 is formed irregularly such that the area increases toward a zone which overlaps the liquid inlets 14 and 15 formed in the feed-side member 11 shown in FIG 6. As shown in FIG 6, throttle portions 64, 65, and 66 are formed on an end face of the feed-side member 11 opposite the sliding surface 11a so as to correspond to the liquid inlets 14 and 15 and the liquid discharge portion 16, respectively. Facing portions 54, 55, and 56 are formed along the circumferential edges of the throttle portions 64, 65, and 66 so as to receive the respective seal members 19 (FIG 2).

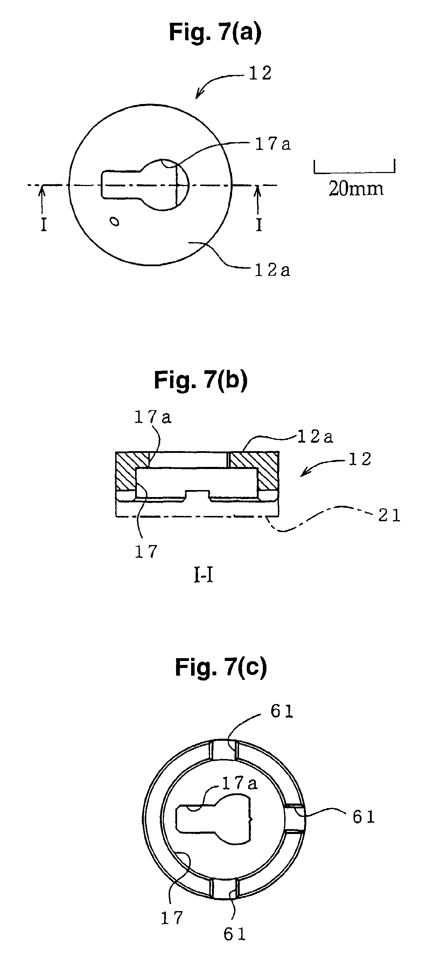

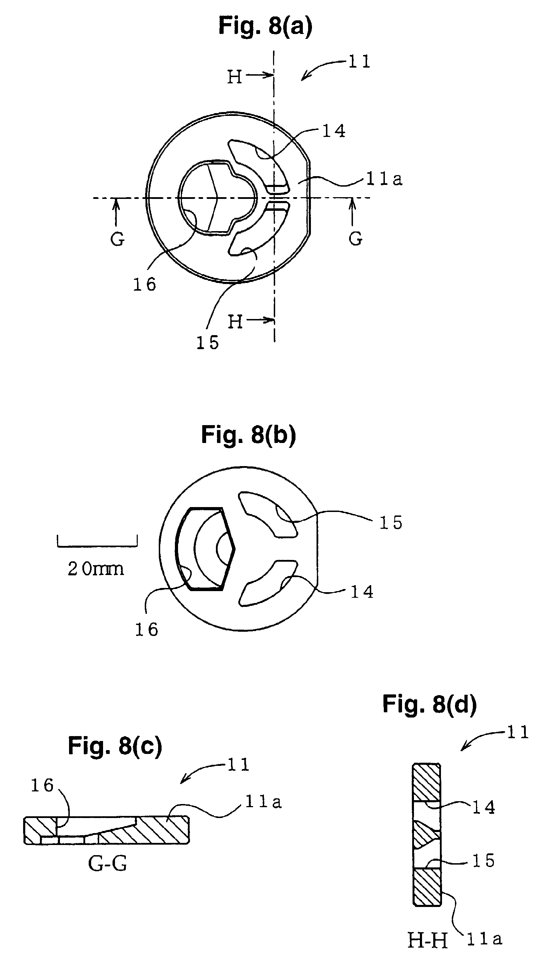

FIGS. 7 and 8 show another modified example of the ceramic valve. FIG. 7 shows the flow regulation member 12 of the modified ceramic valve, and FIG. 8 shows the feed-side member 11 of the modified ceramic valve (FIGS. 7 and 8 include a 20 mm scale for dimensional reference and do not show the hard carbon film). On an end face of the flow regulation member 12 opposite the sliding surface 12a, the mixing chamber 17 opens, and there are formed recesses 61 for attachment of the cover 21 serving as the movable-valve-body mount member. In this configuration, the cover 21 covers the mixing chamber 17. An opening portion 17a of the mixing chamber 17 assumes such a keyhole-like shape that the area increases toward a zone which overlaps the liquid inlets 14 and 15 formed in the feed-side member 11 shown in FIG 8.

In order to confirm the effects of the present invention, the following experiments were carried out.

The flow regulation member 12 shown in FIG 5 and the feed-side member 11 shown in FIG 6 were manufactured in the following manner. A alumina powder having a purity of 99.8% and SiO₂ and MgO powders having a purity of 99.8%, which serve as sintering aid powders, were mixed at predetermined proportions, thereby obtaining a raw-material powder. 5 Parts by weight poval wax and stearic acid, which serve as binders, and 103 parts by weight water were added to the raw-material powder, per 100 parts by weight raw-material powder, followed by wet mixing to thereby prepare a basis-material slurry. The thus-obtained slurry was dried through spray dry process and sieved so as to obtain a basis-material powder having a grain size of 80-150 µm. The basis-material powder was compacted into green compacts corresponding to the flow regulation member 12 and the feed-side member 11 at a pressure of 58.8 MPa by use of a press. These green compacts were sintered at a predetermined temperature, thereby obtaining sintered bodies corresponding to the flow regulation member 12 and the feed-side member 11. In order to obtain sintered bodies of different hardness levels, manufacturing conditions A and B shown in Table 1 were employed. The density of the obtained sintered bodies was measured by the Archimedean method. After the test was completed, the members were cut. Each of the thus-obtained sections was polished and then photographed by use of SEM. The SEM photos were subjected to image analysis, thereby obtaining the average grain size of the sintered bodies. The measurement results are also shown in Table 1.

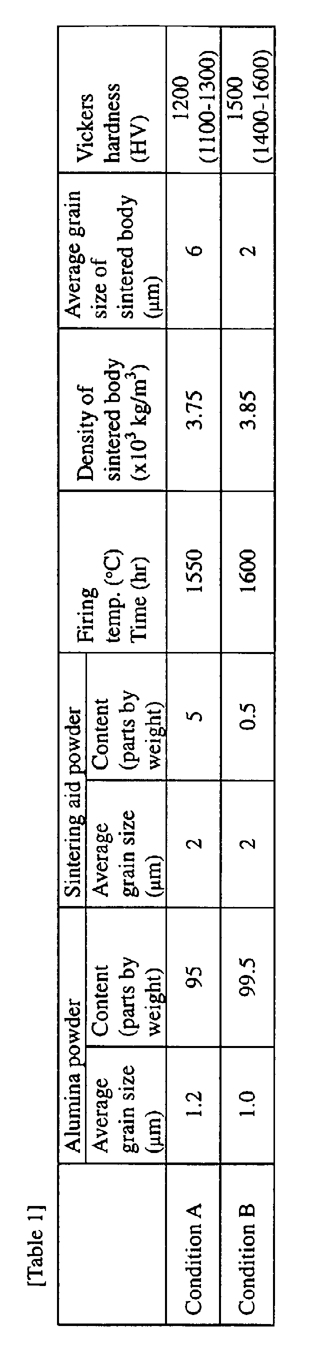

End faces of the sintered bodies, which were to become the sliding surfaces of the flow regulation member 12 and the feed-side member 11, were lapped by use of abrasive grains of diamond (condition C: average grain size of abrasive grains 2 µm; conditions D: average grain size of abrasive grains 3 µm). The polished surfaces were measured for surface roughness and surface waviness on the basis of JIS-B0601 (1994) and JIS-B0610 (1996) by use of a surface roughness meter (TALYSURF: trade name of product of Taylor Hobson Corp.). Measurement was made at 10 points on each sample. The average of 10 measured values was calculated. Measured parameters regarding surface roughness were arithmetic mean roughness Ra, maximum height Ry, 10-point mean roughness Rz, maximum roughness Rt, average spacing between local peaks S, and average spacing between profile irregularities Sm (cut-off wavelength: 0.25 mm; evaluation length: 1.25 mm). Measured parameters regarding surface waviness were filtered centerline waviness W_{CA} and filtered maximum waviness W_{CM} (high-frequency-band cut-off wavelength: 0.8 mm; evaluation length: 4 mm). The results of surface roughness measurement are shown in Table 2 ("before formation of film").

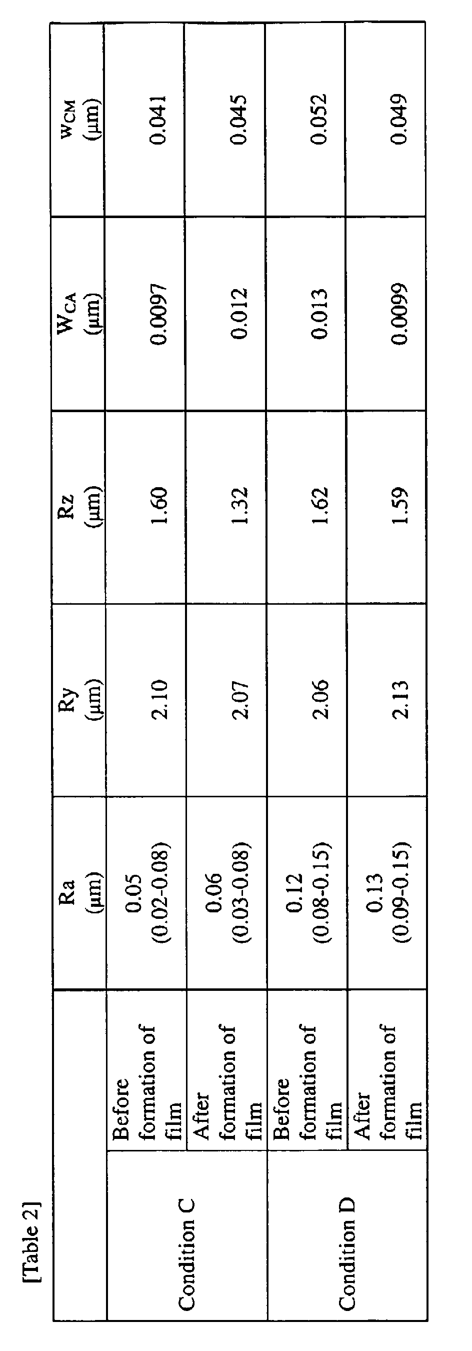

Next, the hard carbon film was formed by an RF plasma CVD process on the polished surfaces of two kinds of the feed-side members 11 and the flow regulation members 12 manufactured under the above-mentioned conditions A and B. The hard carbon film was formed on the polished surface of the feed-side member 11 or the flow regulation member 12 or on both of the polished surface of the feed-side member 11 and the polished surface of the flow regulation member 12. The conditions of the RF plasma CVD process were as follows: material gas: methane; frequency of radio frequency source: 13.56 MHz; output of radio frequency source: 2 kW; and pressure of introduced methane: as specified in Table 3.

**[Table 3]**

| | Pressure of introduced methane (torr) | Radio frequency output (kW) | Knoop hardness HK of DLC film | Average film thickness (µm) |
|---|---|---|---|---|
| 1 | 0.6 | 2 | 1075 (1000-1150) | 1.1 |
| 2 | 0.5 | 2 | 1275 (1200-1350) | 1.2 |
| 3 | 0.4 | 2 | 1600 (1550-1650) | 1.0 |

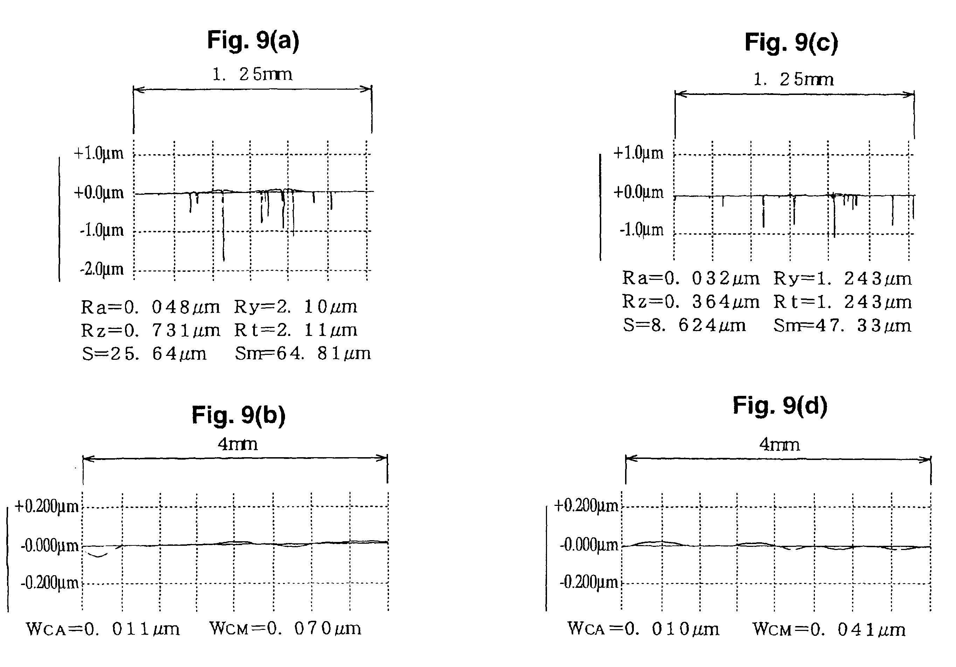

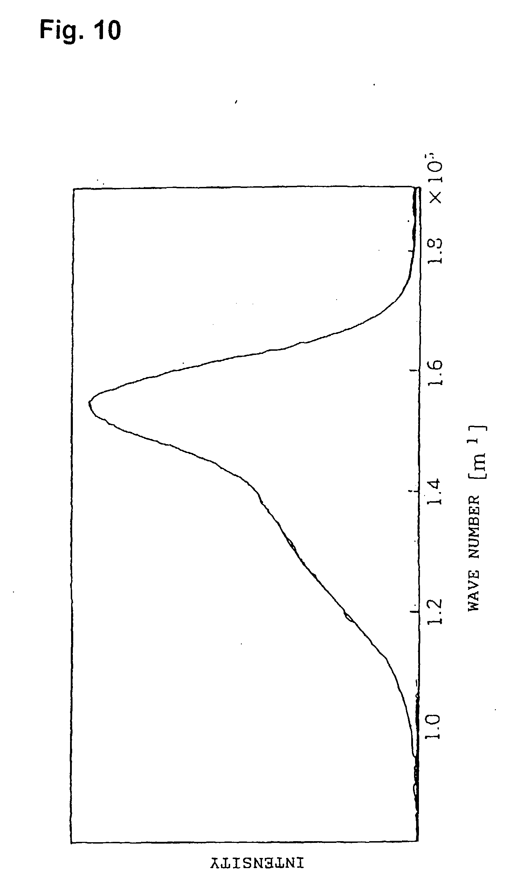

The formed hard carbon films were measured for surface roughness and surface waviness under the aforementioned conditions. The results are shown in Table 2. FIGS. 9a and 9b show a surface roughness curve and a surface waviness curve of the polished surface of a sintered body as prepared in the following manner: the sintered body was manufactured under condition 5 shown in Table 1 and then subjected to polishing under condition C to thereby obtain the polished surface. FIGS. 9c and 9d show a surface roughness curve and a surface waviness curve of the sliding surface of the sintered body as measured after the hard carbon film was formed under condition 2 shown in Table 3. Additionally, the hard carbon film was measured for a diffraction profile by means of an X-ray diffractometer. The measured diffraction profile showed a halo pattern indicative of an amorphous structure. FIG. 10 shows a Raman spectrum profile as obtained through measurement of the surface of the hard carbon film by use of a Raman spectroscopy (Labram: trade name of product of ISA Corp., France; Ar laser (wavelength: 514.5 nm; spot diameter: 10 µm)). This peak corresponds mainly to a Raman band of graphite at 1.584 m⁻¹ and conceivably includes a Raman band of diamond at near 1.332 m⁻¹. In any case, the entire Raman spectrum profile is monotonous and has a single rather broad peak.

Next, the Vickers hardness Hv of the ceramic substrate on which the sliding surface 11 a of the feed-side member 11 is formed was measured at a test load of 196 N by the method specified in JIS-R1601 (1996). Hardness was measured at 5 points on each sample. The maximum and minimum measured values of hardness were cut away, and the average of the remaining measured values was calculated. The thus-obtained average value was taken as a measured hardness value of the sample. The average of measured hardness values of 5 samples manufactured under condition A was calculated for use as hardness for condition A. Likewise, the average of measured hardness values of 5 samples manufactured under condition B was calculated for use as hardness for condition B. Table 1 shows the thus-obtained average value of Vickers hardness Hv and the range of Vickers hardness Hv (enclosed in parentheses). The Knoop hardness Hk of the hard carbon film 40 which forms the sliding surface 12a of the flow regulation member 12 was measured at a test load of 0.196 N by the method specified in JIS-Z2251 (1996) (the results of measurement are shown in Table 3). Hardness was measured at 5 points on each sample. The maximum and minimum measured values of hardness were cut away, and the average of the remaining measured values was calculated. The thus-obtained average value was taken as a measured hardness value of the sample.
The average of measured hardness values of 5 samples polished under condition C was calculated for use as hardness for condition C. Likewise, the average of measured hardness values of 5 samples polished under condition D was calculated for use as hardness for condition D. Table 3 shows the thus-obtained average value of Knoop hardness Hk and the range of Knoop hardness Hk (enclosed in parentheses). The average thickness of the hard carbon film 40 was measured from an image of cross section of each sample photographed through SEM (Table 3 shows the results of measurement). The test results revealed that the depth of penetration di of the Knoop hardness indenter was not greater than 50% the average film thickness t with respect to all the samples. It was also revealed that the measurement of Knoop hardness was not influenced by a difference in ceramic substrate hardness between conditions A and B.

The thus-manufactured feed-side members 11 and flow regulation members 12 were combined as shown in Table 4, thereby manufacturing ceramic valve units as shown in FIG 2. No grease was applied between the sliding surface of the feed-side member 11 and the sliding surface of the flow regulation member 12, and the feed-side member 11 and the flow regulation member 12 were pressed against each other at an axial force of 20 kgf by means of the casing. Each of the valve units was subjected to the pressure test specified in JIS-B2061 (1997) (water of room temperature was injected into the valve unit at 1.75 MPa from the liquid feed port 14a shown in FIG 2 while the valve unit was closed) so as to check for water leakage. Subsequently, the valve unit was fully opened. While hot water at 80°C was injected into the valve unit at 0.17 MPa from the liquid feed port 14a, water of room temperature was injected into the valve unit at 0.1 MPa from the liquid feed port 15a. The flow regulation member 12 was caused to slidingly rotate relative to the feed-side member 12, by means of the operation lever 18, thereby measuring a load required for sliding. Sliding was repeated by 200,000 cycles. One cycle was composed of the steps of causing hot water to run; causing mixed water to run; causing cold water to run; and turning off the valve unit. After completion of 200,000 cycles of sliding, a valve unit having a sliding load of not greater than 1 kg was evaluated to be good (o), whereas a valve unit having a sliding load in excess of 1 kg was evaluated to be poor (x). After the test, the hard carbon film was visually checked for presence/absence of wear by means of a magnifier. A hard carbon film which did not exhibit any change was evaluated to be "absent"; a hard carbon film which did not exhibit any exposure of a ceramic substrate, but exhibited some wear (presence of wear is confirmed from emergence of Moire fringes) was evaluated to be "minor"; and a hard carbon film which exhibited exposure of a ceramic substrate was evaluated to be "present." The results are shown in Table 4.

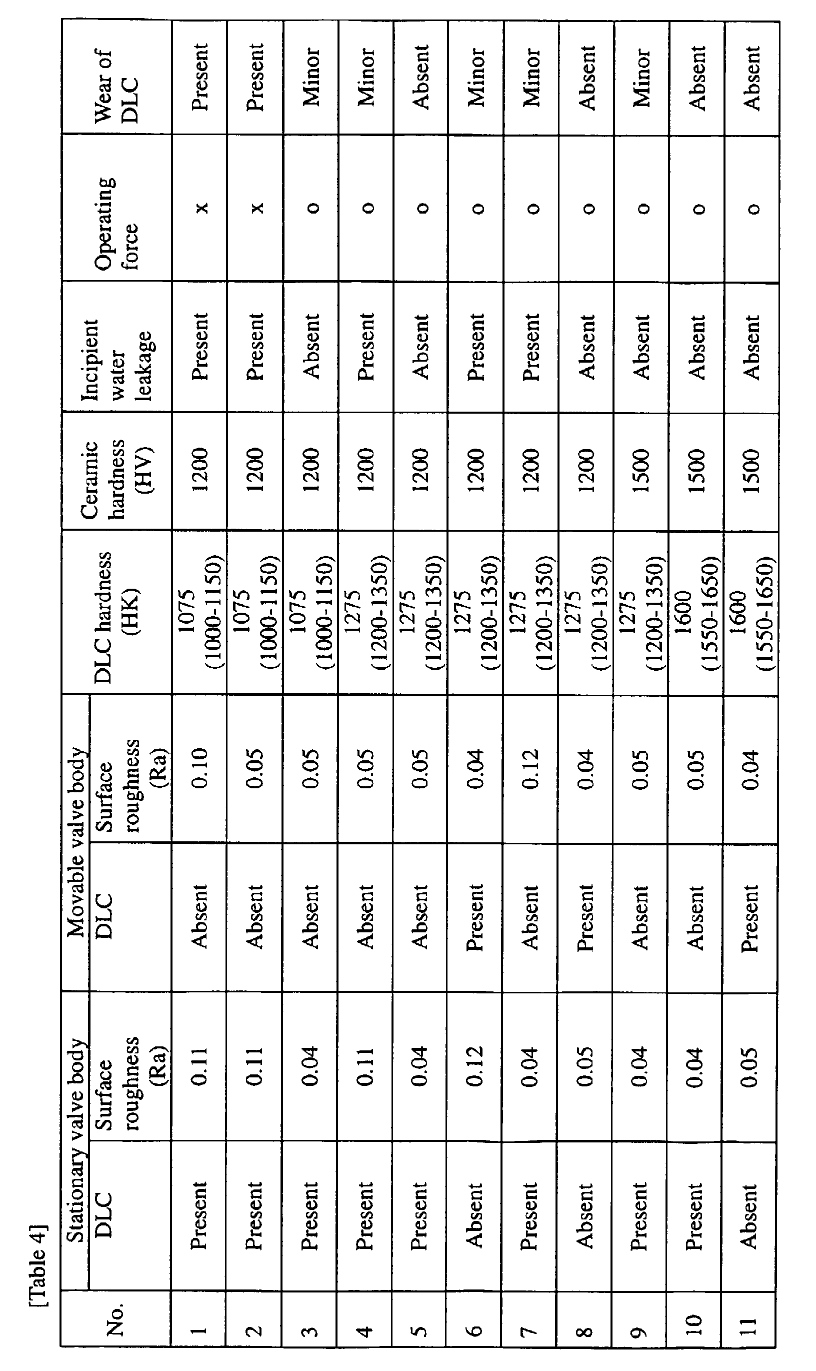

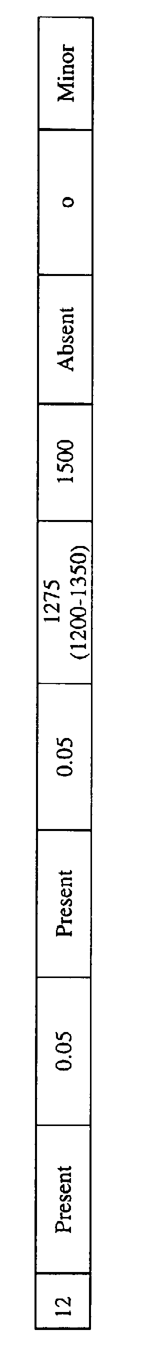

The above results reveal the following. In the case of a valve in which the hard carbon film is formed on the sliding surface of one of the feed-side member 11 and the flow regulation member 12, when the arithmetic mean roughness Ra of the sliding surface of the feed-side member 11 or the flow regulation member 12 is in excess of 0.08 µm, wear of the hard carbon film occurs, and incipient water leakage occurs. Even in the case where the Ra value is not greater than 0.08 µm, when the Knoop hardness Hk of the hard carbon film is lower than the Vickers hardness Hv of the sliding-mate material, wear of the hard carbon film occurs. By contrast, through impartment of an arithmetic mean roughness Ra of not greater than 0.08 µm to both of the sliding surface of the feed-side member 11 and the sliding surface of the flow regulation member 12 and employment of a value of Knoop hardness Hk of the hard carbon film greater than a value of Vickers hardness Hv of a sliding-mate substrate, there can be realized a valve free of incipient water leakage and exhibiting good sliding properties and good durability of sliding properties.

## Claims

1. A ceramic valve comprising a stationary valve body made of ceramic and a movable valve body made of ceramic, characterized in that:
a sliding surface of one of said valve bodies is covered with a hard carbon film comprising amorphous carbon, and a sliding surface of said stationary valve body and a sliding surface of said movable valve body each have an arithmetic mean roughness Ra of not greater than 0.08 µm; and
V1 is greater than V2, wherein V1 is a Knoop hardness Hk of said hard carbon film, and V2 is a Vickers hardness Hv of a ceramic substrate which forms a sliding surface portion of the other valve body on which said hard carbon film is not formed.

2. A ceramic valve according to claim 1, wherein said hard carbon film is formed mainly of amorphous carbon.

3. A ceramic valve according to claim 1 or claim 2, wherein in said valve body on which said hard carbon film is formed, a surface of a ceramic substrate on which said hard carbon film is formed has an arithmetic mean roughness Ra of not greater than 0.08 µm.

4. A ceramic valve according to any of claims 1 to 3, wherein said hard carbon film has a Knoop hardness Hk of 1200-1800 as measured under the condition that a tip portion of an indenter for measuring hardness does not reach the ceramic substrate on which said hard carbon film is formed.

5. A ceramic valve comprising a stationary valve body made of ceramic and a movable valve body made of ceramic, characterized in that a sliding surface of at least one of said valve bodies is covered with a hard carbon film formed mainly of amorphous carbon and in that said hard carbon film has a Knoop hardness Hk of 1200-1800 as measured under the condition that a tip portion of an indenter for measuring hardness does not reach a ceramic substrate on which said hard carbon film is formed.

6. A ceramic valve according to any one of claims 1 to 5, wherein an average thickness of said hard carbon film is not less than 0.9 µm.

7. A ceramic valve according to any one of claims 1 to 6, wherein said stationary valve body and said movable valve body are disposed such that the sliding surface on which said hard carbon film is formed and the sliding surface on which said hard carbon film is not formed are in direct contact with each other without positive interposition of lubricant therebetween.

8. A ceramic valve according to any one of claims 1 to 7, wherein the ceramic substrate of said stationary valve body and the ceramic substrate of said movable valve body are formed of an alumina-based dense sintered body.

9. A ceramic valve according to any one of claims 1 to 8, wherein one of said stationary valve body and said movable valve body serves as a feed-side member having one or more liquid feed portions; the other valve body is disposed in a relatively slidable manner with respect to the feed-side member such that said sliding surfaces are in contact with each other, and serves as a flow regulation member for regulating a flow rate of liquid which is fed from the liquid feed portion(s) as a result of sliding; and the feed-side member or the flow regulation member has a liquid discharge portion for discharging the liquid whose flow rate is regulated by the flow regulation member.

10. A ceramic valve according to claim 9, wherein a high-temperature-side feed portion and a low-temperature-side feed portion, which serve as the liquid feed portions, are formed on the feed-side member; and
wherein said ceramic valve further comprises a mixing chamber for varying a feed ratio between the high-temperature-side feed portion and the low-temperature-side feed portion according to sliding of the flow regulation member with respect to the feed-side member.

11. A valve unit comprising:
a ceramic valve according to claim 9 or claim 10;
a movable-valve-body mount member on which said movable valve body is mounted and which comprises an operation member for causing said movable valve body to slide with respect to said stationary valve body; and
a stationary-valve-body mount member on which said stationary valve body is mounted;
said valve unit characterized in that a liquid feed port communicating with the liquid feed portion is formed in the movable-valve-body mount member or the stationary-valve-body mount member which corresponds to a valve body functioning as the flow regulation member, whereas a liquid discharge port communicating with the liquid discharge portion is formed in the movable-valve-body mount member or the stationary-valve-body mount member which corresponds to a valve body on which the liquid discharge portion is formed.
